# EUROPEAN PATENT APPLICATION

(11) **EP 4 834 682 A2**
(43) Date of publication of application: **04.11.2026**
(21) Application number: 26199274.7
(22) Date of filing: 18.08.2026
(51) Int. Cl.: B60T 13/58, B60T 7/04, B60T 7/08, B60T 8/17, B60T 8/58, B60T 13/66, B60T 13/74, B60W 30/18

(54) **METHOD, APPARATUS FOR CONTROLLING JOINT BRAKING OF VEHICLE, DEVICE AND STORAGE MEDIUM**

(30) Priority: 28.08.2025 CN 202511213610
(71) Applicant: SHAANXI TONLY HEAVY INDUSTRIES CO, LTD., 710086 Xi'an City Shaanxi (CN)
(72) Inventor: XUE, Xiaoqiang, Fengdong New City, Xi'an City, 710086 (CN); WANG, Yong, Fengdong New City, Xi'an City, 710086 (CN); DONG, Xiuhui, Fengdong New City, Xi'an City, 710086 (CN); ZHAO, Qiyuan, Fengdong New City, Xi'an City, 710086 (CN); CHEN, Zhaohua, Fengdong New City, Xi'an City, 710086 (CN); LIANG, Zhe, Fengdong New City, Xi'an City, 710086 (CN); YANG, Huijie, Fengdong New City, Xi'an City, 710086 (CN); YAN, Ben, Fengdong New City, Xi'an City, 710086 (CN); LI, Jinlin, Fengdong New City, Xi'an City, 710086 (CN); FENG, Haonan, Fengdong New City, Xi'an City, 710086 (CN)
(74) Representative: Elzaburu S.L.P.

(57) **Abstract**

The present invention discloses a method, an apparatus for controlling joint braking of a vehicle, a device, a storage medium and a product, belonging to the technical field of vehicle braking control. It mainly solves problems including braking performance fade caused by overheating failure of conventional hydraulic braking under heavy-load long downhill conditions, as well as energy distribution and thermal load management of multiple braking systems. Key points of technical solutions: activating drive motor braking in response to operation of an electric brake handle and detecting a power system status in real time; synchronously and gradually increasing the gear stages of the hydraulic retarder and activating in-cylinder engine brake when the drive motor is in an overspeed state; outputting braking force at a preset ratio by the hydraulic retarder and the in-cylinder engine brake for coordinated braking when the engine is in an overspeed state; continuing to perform drive motor braking under a non-over-limit state; activating hydraulic braking in response to foot brake pedal operation. The method of the present invention can realize safe braking, prevent overheating failure and improve energy recovery efficiency.

## Description

### TECHNICAL FIELD

The present application relates to the technical field of vehicle braking control, and in particular, to a method, an apparatus for controlling joint braking of a vehicle, a device and a storage medium.

### BACKGROUND

During operation of a vehicle, especially an off-highway transport vehicle, a heavy-load long downhill condition poses severe challenges to a braking system. Such vehicle, due to its heavy load, long and continuous slope, requires a hydraulic braking system to work for a long time and under high load. When the hydraulic braking system applies braking force repeatedly or continuously, intense friction between friction linings and brake discs/drums generates massive heat. Restricted by heat dissipation conditions, temperature of brakes rises sharply, giving rise to pronounced thermal fade. Specific manifestations are as follows: degraded thermal stability of friction materials reduces the friction coefficient; high temperature may cause vapor lock in hydraulic oil, ultimately leading to substantial attenuation of braking torque or even temporary braking failure. This not only directly impairs vehicle braking capacity but may result in complete loss of deceleration control under extreme conditions, creating severe safety hazards.

To mitigate thermal loads on the hydraulic braking system, some vehicles are equipped with an auxiliary braking apparatus such as a hydraulic retarder or in-cylinder engine brake. Nevertheless, the prior art suffers from the following key difficulties: first, various auxiliary braking systems (e.g., an independent retarder, an exhaust braking or a motor braking) often operate independently or merely adopt simple sequential superposition control, lacking a dynamic coordination mechanism based on overall vehicle states. Second, when confronted with variable slope conditions, vehicle speeds and loads, it is difficult to intelligently allocate the braking force ratio and intervention timing among different auxiliary braking systems. For example, when a rotational speed of the drive motor approaches an upper limit but does not reach a trigger threshold of a conventional retarder, or in emergency scenarios where a rotational speed of engine surges abruptly, the system cannot rapidly and precisely coordinate multiple auxiliary braking sources to implement optimal combined intervention. Third, in energy-recovery auxiliary braking solutions (e.g., a motor braking), output power is limited by State of Charge (SOC) of a battery and the current rotational speed interval of the motor. If it fails to perform real-time adjustment based on these states and achieve seamless coordination with other auxiliary braking systems, it will neither maximize energy recovery nor meet the required braking force demand.

In addition, from the perspective of driver operation, conventional auxiliary braking methods generally require drivers to frequently manually switch or jointly operate different braking apparatuses (e.g., handles, switches). This increases operational complexity and tends to trigger operation delays or misoperations in a continuously tense driving environment during long downhill driving.

Accordingly, how to achieve efficient coordination and state-adaptive control of multiple braking sources is a key bottleneck for improving downhill safety of such vehicles.

### SUMMARY

The objective of the present invention is to provide a method, an apparatus for controlling joint braking of a vehicle, a device, a storage medium and a product, which can at least address the foregoing problems.

To achieve the objective and other advantages of the present invention, a method for controlling joint braking of a vehicle is provided, which includes step 1: in response to a trigger operation on an electric brake handle by a driver, activating, by a vehicle controller, drive motor braking; meanwhile, acquiring a vehicle state parameter monitored by a sensor, and determining whether the vehicle state parameter exceeds a threshold; step 2: when the vehicle state parameter does not exceed the threshold, controlling a drive motor to continue braking; when the vehicle state parameter exceeds the threshold, synchronously controlling an auxiliary braking system to intervene; step 3: in response to a trigger operation of a foot brake pedal by the driver, activating a hydraulic braking system; where, the vehicle state parameter includes a rotational speed of the drive motor and/or a rotational speed of an engine; when it is detected that the rotational speed of the drive motor exceeds the threshold, a hydraulic retarder is synchronously controlled to gradually increase braking gear stages, and an in-cylinder engine brake is activated; and/or, when it is detected that the rotational speed of the engine exceeds the threshold, an emergency braking request transmitted by an engine control unit is synchronously received, so as to trigger the in-cylinder engine brake and the hydraulic retarder to output coordinated braking force at a preset ratio.

Preferably, it further includes setting, by the vehicle controller, upper limits for target negative torque change rates of the hydraulic retarder and the in-cylinder engine brake, and monitoring, in real time, actual output torques and change rates of the hydraulic retarder and the in-cylinder engine brake; when an actual torque change rate of any braking source exceeds the upper limit of the target negative torque change rate of the braking source, temporarily freezing or reducing a torque request of the other braking source until the actual torque change rates of both braking sources fall within the upper limits of the target negative torque change rates.

Preferably, the preset ratio is variable, that is: the vehicle controller acquires a vehicle gradient signal, a vehicle speed signal and a load signal in real time; a target output ratio between the hydraulic retarder and in-cylinder engine brake is dynamically calculated and adjusted according to a gradient signal, the vehicle speed signal and the load signal in combination with a preset braking efficiency map; where, under a condition of an increased gradient or an increased vehicle speed, a target output proportion of the hydraulic retarder is increased; under a condition of a reduced gradient, a reduced vehicle speed or a reduced load, a target output proportion of the in-cylinder engine brake is increased.

Preferably, when none of the vehicle state parameters exceeds the threshold and the drive motor continues braking, the method further includes: dynamically adjusting energy recovery intensity according to a state of an energy storage unit and the rotational speed of the drive motor, and acquiring a target negative torque value of the drive motor and a fed-back actual executed negative torque value; when the actual executed negative torque value of the drive motor fails to reach the target negative torque value, activating the hydraulic retarder and the in-cylinder engine brake to compensate the braking force.

Preferably, it further includes when the actual executed negative torque value of the drive motor remains continuously lower than the target negative torque value until a predetermined time threshold is reached, generating hydraulic braking demand prompt information.

Preferably, dynamically adjusting the energy recovery intensity according to the state of the energy storage unit and the rotational speed of the drive motor further includes: determining, by the drive motor controller, an optimal energy recovery interval according to state of charge of the energy storage unit and a rotational speed threshold of the drive motor; and automatically adjusting feedback energy intensity within the optimal energy recovery interval to achieve the target negative torque value.

Preferably, when the drive motor controller determines the optimal energy recovery interval and automatically adjusts the feedback energy intensity, the method further includes: acquiring, in real time, a change rate of the state of charge of the energy storage unit; when an absolute value of the change rate of the state of charge exceeds a preset threshold, predicting a trend of the state of charge within a predetermined future time window based on current state of charge and its change rate; dynamically correcting the optimal energy recovery interval according to predicted trend of the state of charge, and adjusting the feedback energy intensity based on the corrected interval.

The present invention further provides an apparatus for controlling joint braking of a vehicle, which adopts the above method for controlling the joint braking of the vehicle and includes: an operation and parameter monitoring module, configured to, in response to a trigger operation on an electric brake handle by a driver, activate, by a vehicle controller, drive motor braking; meanwhile, acquire a vehicle state parameter monitored by a sensor, and determine whether the vehicle state parameter exceeds a threshold; an auxiliary braking module, configured to perform braking intervention in response to the vehicle state parameter exceeding the threshold; a hydraulic braking module, configured to, in response to a trigger operation of a foot brake pedal by the driver, activate a hydraulic braking system; where, the vehicle state parameter includes a rotational speed of a drive motor and/or a rotational speed of an engine; when it is detected that the rotational speed of the drive motor exceeds the threshold, a hydraulic retarder is synchronously controlled to gradually increase braking gear stages, and an in-cylinder engine brake is activated; and/or, when it is detected that the rotational speed of the engine exceeds the threshold, an emergency braking request transmitted by an engine control unit is synchronously received, so as to trigger the in-cylinder engine brake and the hydraulic retarder to output coordinated braking force at a preset ratio.

Preferably, it further includes that the vehicle controller sets upper limits for target negative torque change rates of the hydraulic retarder and the in-cylinder engine brake, and monitors, in real time, actual output torques and change rates of the hydraulic retarder and in-cylinder engine brake; when an actual torque change rate of any braking source exceeds the upper limit of the target negative torque change rate of the braking source, a torque request of the other braking source is temporarily frozen or reduced until the actual torque change rates of both braking sources fall within the upper limits of the target negative torque change rates.

Preferably, the preset ratio is variable, that is: the vehicle controller acquires a vehicle gradient signal, a vehicle speed signal and a load signal in real time; a target output ratio between the hydraulic retarder and in-cylinder engine brake is dynamically calculated and adjusted according to a gradient signal, the vehicle speed signal and the load signal in combination with a preset braking efficiency map; where, under a condition of an increased gradient or an increased vehicle speed, a target output proportion of the hydraulic retarder is increased; under a condition of a reduced gradient, a reduced vehicle speed or a reduced load, a target output proportion of the in-cylinder engine brake is increased.

Preferably, when none of the vehicle state parameters exceeds the threshold and the drive motor continues braking, the method further includes: dynamically adjusting energy recovery intensity according to a state of an energy storage unit and the rotational speed of the drive motor, and acquiring a target negative torque value of the drive motor and a fed-back actual executed negative torque value; when the actual executed negative torque value of the drive motor fails to reach the target negative torque value, activating the hydraulic retarder and the in-cylinder engine brake to compensate the braking force.

Preferably, it further includes when the actual executed negative torque value of the drive motor remains continuously lower than the target negative torque value until a predetermined time threshold is reached, generating hydraulic braking demand prompt information.

Preferably, dynamically adjusting the energy recovery intensity according to the state of the energy storage unit and the rotational speed of the drive motor further includes: determining, by the drive motor controller, an optimal energy recovery interval according to state of charge of the energy storage unit and a rotational speed threshold of the drive motor; and automatically adjusting feedback energy intensity within the optimal energy recovery interval to achieve the target negative torque value.

Preferably, when the drive motor controller determines the optimal energy recovery interval and automatically adjusts the feedback energy intensity, the method further includes: acquiring, in real time, a change rate of the state of charge of the energy storage unit; when an absolute value of the change rate of the state of charge exceeds a preset threshold, predicting a trend of the state of charge within a predetermined future time window based on current state of charge and its change rate; dynamically correcting the optimal energy recovery interval according to the predicted trend of the state of charge, and adjusting the feedback energy intensity based on the corrected interval.

The present invention further provides an electronic device, which includes at least one processor, and a memory communicatively connected to the at least one processor; where the memory stores an instruction executable by the at least one processor, and the instruction, when executed by the at least one processor, causes the at least one processor to perform the above method for controlling the joint braking of the vehicle.

The present invention further provides a storage medium having a computer program stored thereon, where the computer program, when executed by a processor, implements the above method for controlling the joint braking of the vehicle.

The present invention further provides a computer program product, which includes a computer program/instruction, where the computer program/instruction, when executed by a processor, implements the above method for controlling the joint braking of the vehicle.

The present invention at least achieves the following beneficial effects.

First, it significantly improves the reliability and safety of the braking system by a hierarchical response mechanism. After the electric brake handle is triggered, drive motor braking is preferentially activated, and a state of a vehicle power system is monitored in real time to guarantee timely braking intervention. When overspeed of the drive motor is detected, the gear stages of the hydraulic retarder are synchronously and gradually increased and in-cylinder engine brake is activated to avoid the risk of failure caused by overload of a single braking source. In case of engine overspeed, braking force is output in coordination according to a preset ratio to implement rigid protection of the power system. Under non-over-limit conditions, energy recovery intensity is dynamically adjusted, and in combination with the braking force compensation mechanism, kinetic energy recovery is maximized while meeting the braking force demand. The independent response of the foot brake pedal ensures redundancy during emergency braking. The overall scheme effectively addresses the problems of braking fade due to overheating and low multi-system coordination efficiency under heavy-load long downhill conditions, extends a service life of braking components and improves driving safety.

Second, the dynamic judgment mechanism for the "optimal energy recovery interval" is introduced to greatly boost energy recovery efficiency and system stability. Based on the State of Charge (SOC) of the energy storage unit and rotational speed thresholds, the drive motor controller determines the high-efficiency recovery interval in real time, avoiding energy waste or battery damage caused by conventional fixed strategies under boundary conditions (such as high or low SOC). Energy feedback intensity is automatically adjusted within the optimal interval to accurately achieve the target negative torque and reduce unnecessary intervention of auxiliary braking. This design not only elevates the energy recovery rate under downhill conditions, but also mitigates large-current charge-discharge impact on the battery through smooth torque output, prolongs the service life of the energy storage system, reduces the frequency of hydraulic braking compensation, and alleviates thermal load on the braking.

Third, a prediction mechanism based on a change rate of the SOC effectively enhances the robustness and adaptability of energy recovery control. By monitoring the change rate of the SOC in real time and predicting its trend, the system can identify risks of rapid SOC fluctuations in advance (such as abrupt change induced by intense energy recovery or driving), and dynamically correct the optimal energy recovery interval. This design solves the problems of delayed recovery intensity or frequent braking force compensation arising from distorted instantaneous SOC values in conventional solutions, and ensures continuous and stable output of the target negative torque. Especially in critical SOC intervals (near full charge or low charge), system oscillation is greatly reduced, recovery interruption or accidental activation of hydraulic braking is avoided, thereby improving driving smoothness and optimizing energy recovery efficiency.

Fourth, by setting upper limits of torque change rates and adopting a cross-coordination strategy, the smoothness problem caused by response differences among multiple braking sources is resolved. The vehicle controller monitors the actual torque change rates of the hydraulic retarder and the in-cylinder engine brake in real time. When the response rate of any braking source exceeds the threshold, the torque request of the other braking source is dynamically frozen or reduced to force synchronous responses. This mechanism effectively suppresses superposition or insufficiency of instantaneous braking force caused by differences in response time of hydraulic systems, engine cycles and electronic control units, and avoids vehicle jerk especially under emergency braking conditions. Meanwhile, linear torque growth is guaranteed during coordinated braking to improve braking comfort and prevent mechanical shock or component damage induced by an abrupt torque change.

Fifth, a variable ratio mechanism greatly enhances the condition adaptability and energy efficiency ratio of the braking system. Based on real-time gradient, vehicle speed and load signals, the vehicle controller dynamically adjusts the output ratio of the hydraulic retarder and in-cylinder engine brake with reference to a braking efficiency map: the proportion of the hydraulic retarder is increased under high-speed, steep-slope and heavy-load conditions to take advantage of its high-speed braking performance; the proportion of in-cylinder engine brake is raised under low-speed, light-load and gentle-slope conditions to reduce hydraulic energy loss. This design overcomes the defects of low hydraulic retarder efficiency at low speeds or insufficient engine braking force at high speeds caused by a fixed ratio, and ensures efficient generation of braking force across all conditions. Meanwhile, it optimizes engine fuel economy, lowers noise and wear, and avoids unnecessary intervention of friction braking.

Sixth, an insufficient braking force early warning mechanism strengthens the active safety protection capability of the system. By continuously comparing the target negative torque with the actual executed torque, a hydraulic braking demand prompt is actively generated when it is detected that the duration of the braking force gap exceeds a predetermined time threshold. This design provides a driver with a critical reaction window to avoid sudden braking failure risks caused by gradual attenuation of braking force. Especially in long downhill or continuous braking scenarios, early warning enables the driver to activate a main hydraulic braking system in a timely manner, prevents overload of an auxiliary braking system, ensures reliable triggering of a braking redundancy mechanism, and significantly reduces accident risks.

Seventh, the method for controlling the joint braking achieves significant technical effects in the test phase. Measured data shows that compared with a conventional pure hydraulic braking system, the method can effectively reduce temperature rise of the brakes and extend the service life of brake linings. In terms of energy recovery, the priority strategy of drive motor braking improves the energy recovery rate under downhill conditions and greatly boosts the operating economy of mining trucks. At the operation level, complex braking logic is converted into a simple interaction mode of "handle priority + automatic supplementary", which simplifies driver operation steps and effectively lowers the risk of human misoperations. Particularly in long downhill scenarios, the system automatically maintains the target vehicle speed with an accuracy of ±1.5 km/h, completely eliminating brake fade caused by frequent pumping of brake pedal required in conventional braking modes.

Other advantages, objectives and features of the present invention will be partially set forth in the following description, and partially will be understood by those skilled in the art upon research and practice of the present invention.

### DESCRIPTION OF EMBODIMENTS

The present invention will be described in further detail below in conjunction with embodiments, so that those skilled in the art can implement the present invention with reference to the contents of this specification.

It should be understood that terms such as "have", "comprise" and "include" used herein do not exclude the existence or addition of one or more other components or combinations thereof.

It should be noted that all experimental methods described in the following embodiments are conventional methods unless otherwise specified, and all reagents and materials are commercially available unless otherwise specified.

In a first aspect, the present invention provides a method for controlling joint braking of a vehicle.

According to an implementation of the present invention, a method for controlling joint braking of a vehicle is implemented through the following procedures:
an initial triggering stage: the driver toggles an electric brake handle, a vehicle controller immediately activates drive motor braking and collects, in real time, a motor speed, an engine speed and state of charge of a battery;
an overspeed response stage (heavy-load downhill condition): when it is detected that a rotational speed of a drive motor exceeds a safety threshold, two operations are performed synchronously: issuing a command to a hydraulic retarder to gradually increase gear stages (with an interval of no more than 0.5 seconds per gear stage), and activating in-cylinder engine brake via hard-wire signals simultaneously;
an overspeed emergency braking stage (critical condition): if a rotational speed of an engine exceeds a critical value, a CAN bus request sent by the engine control unit is received, the hydraulic retarder is controlled to output negative torque to a preset reference value, and the in-cylinder engine brake is commanded to output a maximum braking force, for example, the hydraulic retarder outputs 74% of the negative torque, and the in-cylinder engine brake outputs 100% of the braking force;
a dynamic compensation stage (conventional downhill condition): when neither the motor nor the engine exceeds its limit, the drive motor controller calculates an optimal energy recovery interval according to the state of charge of the battery and a rotational speed threshold, and automatically adjusts the energy feedback intensity; if the actual motor braking force is lower than the target negative torque value, the hydraulic retarder and in-cylinder engine brake are synchronously triggered to compensate for the braking force gap;
a redundancy guarantee stage: when the driver depresses the foot brake pedal, the hydraulic braking system is activated immediately without being restricted by the foregoing logic.

In existing joint braking control, a graded braking strategy is usually adopted. After the driver toggles the electric brake handle, the vehicle controller only activates drive motor braking; when the rotational speed of the motor exceeds the threshold, the hydraulic retarder and in-cylinder engine brake are sequentially activated.

Compared with the existing joint braking control, the present implementation adopts synchronous intervention instead of sequential activation. By the synchronous execution of gear stage increase of the hydraulic retarder and the activation of the in-cylinder brake, a braking response time gap is eliminated and build-up time of key braking force is shortened compared with conventional methods. Proportional coordination is adopted to replace fixed superposition, and the braking force ratio of the hydraulic retarder and in-cylinder brake is distributed according to real-time demands under engine overspeed, so as to avoid insufficient mechanical braking force under high-speed conditions. Dynamic compensation is adopted to replace passive limitation. Under high state of charge of the battery, the hydraulic retarder and in-cylinder brake instantly compensate for the motor braking force gap to maintain target vehicle speed stability.

According to another implementation of the present invention, the drive motor controller collects the state of charge of the battery and rotational speed data of the drive motor in real time. A boundary of a recovery interval is dynamically adjusted according to SOC grading result: the recovery interval is extended to a motor peak torque region under low SOC, and contracted to a lower limit of a constant power region under high SOC. Meanwhile, an interval width is optimized in combination with rotational speed thresholds, and a widest high-efficiency recovery band is set for the medium-speed region. Within the dynamically defined optimal interval, the system automatically adjusts the intensity of energy feedback current: if an actual vehicle speed is lower than a target value, the recovery torque is increased linearly; if the battery temperature rises abnormally, the output power is reduced stepwise. Finally, the actual motor braking torque is continuously compared with the target torque, and a compensation mechanism is activated when deviation exceeds a limit.

The conventional method usually adopts table-lookup single-parameter control. The drive motor controller only determines a recovery intensity threshold via table lookup according to the current SOC of the battery and maintains a fixed torque output. Such method exhibits obvious defects when the SOC changes rapidly. When the vehicle enters an initial stage of long downhill, the SOC of the battery is low, and the system recovers energy at the maximum intensity. However, as the SOC continuously rises to a preset threshold, the energy recovery intensity is suddenly cut off, resulting in instantaneous attenuation of the braking force and forcing the hydraulic retarder to intervene immediately for compensation. This step variation causes significant vehicle jerk. Meanwhile, this strategy ignores the influence of rotational speed and performs high-load recovery even in the low motor speed interval, which not only leads to low energy conversion efficiency but also aggravates mechanical braking wear due to torque fluctuations.

Compared with the prior art, in the present implementation, the recovery interval is dynamically defined by using dual parameters of the state of charge and the rotational speed, to replace a conventional single-parameter fixed threshold, which fundamentally avoids abrupt changes in the braking force in boundary regions. Continuous adjustment of energy feedback intensity is realized within the optimal interval, eliminating the step response caused by table lookup control. Furthermore, a motor high-efficiency speed interval is incorporated into a decision-making model to solve the problem of energy conversion loss under low-speed and high-load conditions. These improvements enable the system to adapt to continuous SOC variations and optimize recovery efficiency during an entire speed range.

According to another implementation of the present invention, the drive motor controller continuously collects the SOC of the battery and calculates its change rate. When an absolute value of the change rate exceeds a preset sensitivity threshold, a SOC trajectory within a future specific time window is predicted based on a current value and a direction of change. If the prediction indicates that an upper limit will be reached, the optimal recovery interval is narrowed in advance and the energy feedback intensity is reduced; if the prediction indicates that a lower limit will be reached, the recovery interval is expanded and the recovery intensity is increased. After dynamically correcting a boundary of an optimal interval based on the prediction result, the system smoothly adjusts an actual recovery torque within the interval. The entire process forms a closed loop of "monitoring, prediction, correction and execution" until the change rate of the SOC returns to a stable range.

Conventional methods generally adopt real-time feedback control. The drive motor controller detects a current state of charge of the battery in each cycle and immediately reduces the recovery intensity once the preset threshold is exceeded. Such methods can maintain stable performance under slowly varying SOC conditions, but suffer severe defects under rapidly changing conditions. During traveling downhill under heavy load, intensive recovery rapidly pushes the SOC close to the upper limit. Since the system cuts off recovery only after the threshold is reached, the hydraulic retarder is forced to immediately compensate for the braking force gap, resulting in vehicle jerk. When the SOC drops due to a sudden drop in driving load, the system reactivates recovery, causing a step change in torque. More seriously, minor fluctuations near a critical point of the SOC will trigger frequent switching of recovery states, accelerating the wear of mechanical braking components.

Different from the prior art, an advancement of the present implementation lies in replacing passive response with trend prediction. Dynamic trends are captured through the change rate of the SOC, and a control strategy is adjusted in advance before the SOC reaches the threshold. This avoids repeated oscillations of conventional methods in the critical range and eliminates sudden demands for braking force compensation. Meanwhile, the prediction mechanism enables the system to adapt to the inertial characteristics of battery response, for example, predicting the rising SOC curve at the initial stage of the intensive recovery and reducing the recovery intensity gradually rather than dropping it abruptly in a threshold-triggered manner, thereby ensuring continuous torque output.

According to still another implementation of the present invention, the vehicle controller sets respective upper limits for the change rates of the target negative torque for the hydraulic retarder and the in-cylinder engine brake. When the system enters the coordinated braking mode, instantaneous change rates of actual output torques of both are monitored in real time. If it is detected that the torque change rate of the hydraulic retarder exceeds its upper limit, the torque increase request for the in-cylinder engine brake is immediately frozen until the torque change rate of the hydraulic retarder falls back within the allowable range. Conversely, if the torque change rate of the in-cylinder engine brake exceeds its upper limit, the gear increase of the hydraulic retarder is synchronously suppressed. During a freezing period, the current torque output of the other braking source is maintained, and coordinated torque increase is resumed after the change rates of the both stabilize within the thresholds. The above process is executed cyclically until the target braking force is achieved.

Conventional solutions commonly adopt a time-delay compensation mechanism. When issuing braking commands, the vehicle controller presets a fixed delay time for the slow-responding hydraulic retarder while activating the in-cylinder engine brake immediately. Although this scheme works under steady-state conditions, it has fatal defects in dynamic scenarios. When the vehicle suddenly enters a steep downhill from a flat road, the preset delay time fails to match the actual response of the hydraulic retarder, creating a dangerous response gap in which motor braking exits while torque of the hydraulic retarder fails to reach its peak value. More critically, under conditions with continuous alternation between braking and acceleration, the fixed delay causes release of mechanical braking torque to lag behind the exit of motor braking, generating unexpected drag torque. In an actual test, this response mismatch results in longitudinal acceleration of a passenger compartment exceeding its threshold.

Compared with the conventional methods, the present implementation adopts dynamic interlocking instead of static delay. By capturing, in real time, the change rate of the torque of each braking source, when the response is too fast, output rhythm of other braking sources is actively suppressed to enforce synchronous progression. This not only eliminates braking force fluctuations caused by fixed parameters in conventional schemes, but more importantly, adapts to variations in response characteristics under different temperatures, oil pressures and rotational speeds. For example, low ambient temperature increases hydraulic oil viscosity and slows down the response of the hydraulic retarder, whereby the system automatically extends waiting time for the in-cylinder engine brake. When the engine cycle is shortened under high rotational speed conditions, the threshold of torque change rate is relaxed accordingly. This adaptive coordination fundamentally guarantees the linearity of torque output.

According to still another implementation of the present invention, the vehicle controller collects signals of a gradient sensor, vehicle speed signals, and load signals converted from air suspension pressure in real time. A pre-stored braking efficiency map is invoked, where the map is calibrated via a bench test to obtain peak efficiency curves of the hydraulic retarder and in-cylinder engine brake under combinations of different gradients, vehicle speeds and loads. A current optimal proportion is calculated via interpolation within the three-dimensional map according to real-time signals; for example, when the gradient is greater than 8% or the vehicle speed exceeds 60 km/h, the proportion of the hydraulic retarder is raised to its peak efficiency range; when the gradient is less than 3% and the load rate is below 40%, the proportion of in-cylinder engine brake is increased to more than 80%. Dynamic proportional commands are synchronously transmitted to a hydraulic retarder controller and an engine control unit via a CAN bus for execution.

Conventional methods usually adopt coordination with preset fixed proportions, whereby the hydraulic retarder and in-cylinder engine brake continuously output braking force at a static ratio. This solution leads to two conflicting problems under varying conditions: when a fully loaded ore-carrying vehicle travels on a long downhill, the hydraulic retarder quickly reaches its maximum braking torque; however, the fixed proportion limits the in-cylinder engine brake to outputting only partial torque. The total braking force is insufficient to maintain the target vehicle speed, forcing the hydraulic braking system to intervene prematurely. On the contrary, when the vehicle travels uphill with no load on the return trip, the efficiency of the hydraulic retarder drops sharply in the low rotational speed range. The system still distributes loads according to the fixed proportion, resulting in overloading of the in-cylinder engine brake. This not only leads to a sharp rise in fuel consumption, but also accelerates the aging of the exhaust brake valve due to frequent actuation.

Compared with conventional methods, the present implementation adopts condition sensing instead of mechanical allocation. Current braking demand characteristics are accurately identified through three-parameter fusion sensing. For example, when traveling downhill under heavy load, a dominant role of the hydraulic retarder is automatically enhanced to take advantage of its high-speed and high-torque performance; when traveling a gentle slope under no-loaded conditions, the in-cylinder engine brake is switched as the main mode to leverage its high efficiency at low rotational speeds. More importantly, engine speed protection logic is embedded in the proportion calculation process. When the rotational speed approaches the redline limit, its allocated ratio is automatically reduced to avoid the risk of overspeed caused by forced braking in the conventional solutions. This adaptive mechanism enables coordinated braking to cover all conditions comprehensively.

According to still another implementation of the present invention, a vehicle controller continuously compares a target negative torque with an actual execution value. When it is detected that an actual value is lower than a target value and the deviation exceeds a preset tolerance band, a timer is activated to accumulate continuous duration. If the continuous duration reaches a predetermined threshold, a graded early warning signal is generated: in a first stage, a yellow warning icon and a buzzer prompt are sent to an instrument panel; in a second stage, a braking efficiency degradation code is uploaded to a fleet management system via a vehicle communication module. During an early warning period, a braking force deviation status is rechecked every second. If the deviation disappears, the timer is reset; if the deviation continues to expand, a hydraulic braking standby mode is directly activated when a second time threshold is reached.

In the present implementation, a slowly developing failure trend is accurately identified by capturing time integral effect of braking force deviation. For example, as the oil temperature of a hydraulic retarder rises from 90°C to 120°C, the maximum braking torque thereof linearly decreases from 3000 Nm to 2500 Nm. The present implementation can issue an early warning in advance when the torque drops to 2800 Nm and remains for a set duration, thereby securing critical decision-making time for the driver. Meanwhile, a time threshold mechanism effectively filters interferences such as road surface disturbances and avoids false alarms caused by conventional instantaneous detection.

Further, the present invention further includes, in response to a triggering operation of the driver on an accelerator pedal, cutting off drive motor braking and exiting hydraulic retarder braking within 40-60ms, meanwhile, gradually releasing in-cylinder engine brake. A fast exit mechanism triggered by accelerator operation optimizes the smoothness and responsiveness of power switching. Drive motor braking and hydraulic retarder braking are synchronously cut off within 40-60ms to realize seamless recovery of driving torque; meanwhile, in-cylinder engine brake is gradually released to avoid vehicle jerk caused by an abrupt torque change. This design accurately matches the driver's acceleration intention, eliminates power response lag caused by braking exit delay in conventional systems, and improves driving experience. The gradual release strategy also meets engine protection requirements, prevents mechanical impact induced by sudden deactivation of the in-cylinder engine brake, and ensures the stability of the power system during switching between braking and driving states.

In a second aspect, the present invention further provides an apparatus for controlling joint braking of a vehicle, which adopts the above method for controlling the joint braking of the vehicle, the apparatus includes: an operation and parameter monitoring module, configured to, in response to a trigger operation on an electric brake handle by a driver, activate, by a vehicle controller, drive motor braking; meanwhile, acquire a vehicle state parameter monitored by a sensor, and determine whether the vehicle state parameter exceeds a threshold; an auxiliary braking module, configured to perform braking intervention in response to the vehicle state parameter exceeding the threshold; a hydraulic braking module, configured to, in response to a trigger operation of a foot brake pedal by the driver, activate a hydraulic braking system; where,
the vehicle state parameter includes a rotational speed of a drive motor and/or a rotational speed of an engine; when it is detected that the rotational speed of the drive motor exceeds the threshold, that is, when the drive motor is in an overspeed state, a hydraulic retarder is synchronously controlled to gradually increase braking gear stages, and an in-cylinder engine brake is activated; and/or, when it is detected that the rotational speed of the engine exceeds the threshold, that is, when the engine is in an overspeed state, an emergency braking request transmitted by an engine control unit is synchronously received, so as to trigger the in-cylinder engine brake and the hydraulic retarder to output coordinated braking force at a preset ratio.

The apparatus for controlling the joint braking of the vehicle is obtained by adopting the same inventive concept as the above method for controlling the joint braking of the vehicle, which will not be repeated herein.

In a third aspect, the present invention further provides an electronic device, the electronic device includes at least one processor, and a memory communicatively connected to the at least one processor; where the memory stores a program for controlling joint braking of the vehicle that is executable by the at least one processor, and the program for controlling the joint braking of the vehicle, when executed by the at least one processor, causes the at least one processor to perform the above method for controlling the joint braking.

The electronic device may further include a communication interface and a bus. The processor, the memory and the communication interface may communicate with one another via the bus. The communication interface may be used for information transmission. The processor may invoke the program for controlling the joint braking of the vehicle stored in the memory to execute the above method for controlling the joint braking of the vehicle. When a control instruction stored in the memory is implemented in form of a software functional unit and sold or used as an independent product, it may be stored in a computer-readable storage medium.

In a fourth aspect, the present invention further provides a storage medium having a computer program (such as the above program for controlling the joint braking of the vehicle)stored thereon, which, when executed by a processor, implements the above method for controlling the joint braking of the vehicle.

In a fifth aspect, the present invention further provides a computer program product, which includes a computer program/instruction, where the computer program/instruction, when executed by a processor, implements the above method for controlling the joint braking of the vehicle. This computer software product is stored in a storage medium and contains one or more instructions for causing a computer device (which may be a personal computer, a server, a network device, or the like) to perform all or part of the steps of the method for controlling the joint braking of the vehicle according to the present invention. The aforementioned storage medium may be a non-transitory storage medium including various media capable of storing program codes such as a USB flash drive, a removable hard disk, a read only memory (ROM), a random access memory (RAM), a magnetic disk or an optical disc, and may also be a transitory storage medium.

The quantities of devices and processing scales described herein are used to simplify the description of the present invention. Applications, modifications and variations of a method for controlling joint braking of a vehicle, an apparatus, an electronic device, a storage medium and a computer program product will be apparent to a person skilled in the art.

Although the implementations of the present invention have been disclosed above, the present invention is not limited to the applications listed in the specification and implementations, and can be fully applied to various fields suitable for the present invention. The person skilled in the art can easily implement additional modifications. Therefore, without departing from the general concept defined by the claims and their equivalent scopes, the present invention is not limited to specific details.

## Claims

1. A method for controlling joint braking of a vehicle, comprising:
in response to a trigger operation on an electric brake handle by a driver, activating, by a vehicle controller, drive motor braking; meanwhile, acquiring a vehicle state parameter monitored by a sensor, and determining whether the vehicle state parameter exceeds a threshold;
when the vehicle state parameter does not exceed the threshold, controlling a drive motor to continue braking; when the vehicle state parameter exceeds the threshold, synchronously controlling an auxiliary braking system to intervene;
in response to a trigger operation of a foot brake pedal by the driver, activating a hydraulic braking system; wherein,
the vehicle state parameter comprises a rotational speed of the drive motor and/or a rotational speed of an engine;
when it is detected that the rotational speed of the drive motor exceeds the threshold, a hydraulic retarder is synchronously controlled to gradually increase braking gear stages, and an in-cylinder engine brake is activated; and/or, when it is detected that the rotational speed of the engine exceeds the threshold, an emergency braking request transmitted by an engine control unit is synchronously received, so as to trigger the in-cylinder engine brake and the hydraulic retarder to output coordinated braking force at a preset ratio.

2. The method for controlling the joint braking of the vehicle according to claim 1, further comprising:
setting, by the vehicle controller, upper limits for target negative torque change rates of the hydraulic retarder and the in-cylinder engine brake, and monitoring, in real time, actual output torques and change rates of the hydraulic retarder and the in-cylinder engine brake;
when an actual torque change rate of any braking source exceeds the upper limit of the target negative torque change rate of the braking source, temporarily freezing or reducing a torque request of the other braking source until the actual torque change rates of both braking sources fall within the upper limits of the target negative torque change rates.

3. The method for controlling the joint braking of the vehicle according to claim 1, wherein the preset ratio is variable, that is:
the vehicle controller acquires a vehicle gradient signal, a vehicle speed signal and a load signal in real time;
a target output ratio between the hydraulic retarder and the in-cylinder engine brake is dynamically calculated and adjusted according to a vehicle gradient signal, the vehicle speed signal and the load signal in combination with a preset braking efficiency map;
wherein, under a condition of an increased gradient or an increased vehicle speed, a target output proportion of the hydraulic retarder is increased; under a condition of a reduced gradient, a reduced vehicle speed or a reduced load, a target output proportion of the in-cylinder engine brake is increased.

4. The method for controlling the joint braking of the vehicle according to claim 1, wherein when none of the vehicle state parameters exceeds the threshold and the drive motor continues braking, the method further comprises: dynamically adjusting energy recovery intensity according to a state of an energy storage unit and the rotational speed of the drive motor, and acquiring a target negative torque value of the drive motor and a fed-back actual executed negative torque value; when the actual executed negative torque value of the drive motor fails to reach the target negative torque value, activating the hydraulic retarder and the in-cylinder engine brake to compensate the braking force.

5. The method for controlling the joint braking of the vehicle according to claim 4, further comprising:
when the actual executed negative torque value of the drive motor remains continuously lower than the target negative torque value until a predetermined time threshold is reached, generating hydraulic braking demand prompt information.

6. The method for controlling the joint braking of the vehicle according to claim 4, wherein dynamically adjusting the energy recovery intensity according to the state of the energy storage unit and the rotational speed of the drive motor further comprises:
determining, by the drive motor controller, an optimal energy recovery interval according to state of charge of the energy storage unit and a rotational speed threshold of the drive motor; and
automatically adjusting feedback energy intensity within the optimal energy recovery interval to achieve the target negative torque value.

7. The method for controlling the joint braking of the vehicle according to claim 6, wherein, when the drive motor controller determines the optimal energy recovery interval and automatically adjusts the feedback energy intensity, the method further comprises:
acquiring, in real time, a change rate of the state of charge of the energy storage unit;
when an absolute value of the change rate of the state of charge exceeds a preset threshold, predicting a trend of the state of charge within a predetermined future time window based on current state of charge and its change rate;
dynamically correcting the optimal energy recovery interval according to the predicted trend of the state of charge, and adjusting the feedback energy intensity based on the corrected interval.

8. An apparatus for controlling joint braking of a vehicle, wherein the method for controlling the joint braking of the vehicle according to any one of claims 1 to 7 is adopted, the apparatus comprises:
an operation and parameter monitoring module, configured to, in response to a trigger operation on an electric brake handle by a driver, activate, by a vehicle controller, drive motor braking; meanwhile, acquire a vehicle state parameter monitored by a sensor, and determine whether the vehicle state parameter exceeds a threshold;
an auxiliary braking module, configured to perform braking intervention in response to the vehicle state parameter exceeding the threshold;
a hydraulic braking module, configured to, in response to a trigger operation of a foot brake pedal by the driver, activate a hydraulic braking system; wherein,
the vehicle state parameter comprises a rotational speed of a drive motor and/or a rotational speed of an engine;
when it is detected that the rotational speed of the drive motor exceeds the threshold, a hydraulic retarder is synchronously controlled to gradually increase braking gear stages, and an in-cylinder engine brake is activated; and/or, when it is detected that the rotational speed of the engine exceeds the threshold, an emergency braking request transmitted by an engine control unit is synchronously received, so as to trigger the in-cylinder engine brake and the hydraulic retarder to output coordinated braking force at a preset ratio.

9. The apparatus for controlling the joint braking of the vehicle according to claim 8, further comprising:
setting, by the vehicle controller, upper limits for target negative torque change rates of the hydraulic retarder and the in-cylinder engine brake, and monitoring, in real time, actual output torques and change rates of the hydraulic retarder and the in-cylinder engine brake;
when an actual torque change rate of any braking source exceeds the upper limit of the target negative torque change rate of the braking source, temporarily freezing or reducing a torque request of the other braking source until the actual torque change rates of both braking sources fall within the upper limits of the target negative torque change rates.

10. The apparatus for controlling the joint braking of the vehicle according to claim 8, wherein the apparatus is configured such that the preset ratio is variable, that is:
the vehicle controller acquires a vehicle gradient signal, a vehicle speed signal and a load signal in real time;
a target output ratio between the hydraulic retarder and in-cylinder engine brake is dynamically calculated and adjusted according to a vehicle gradient signal, the vehicle speed signal and the load signal in combination with a preset braking efficiency map;
wherein, under a condition of an increased gradient or an increased vehicle speed, a target output proportion of the hydraulic retarder is increased; under a condition of a reduced gradient, a reduced vehicle speed or a reduced load, a target output proportion of the in-cylinder engine brake is increased.

11. The apparatus for controlling the joint braking of the vehicle according to claim 8, wherein when none of the vehicle state parameters exceeds the threshold and the drive motor continues braking, the apparatus is further configured to: dynamically adjust energy recovery intensity according to a state of an energy storage unit and the rotational speed of the drive motor, and acquire a target negative torque value of the drive motor and a fed-back actual executed negative torque value; when the actual executed negative torque value of the drive motor fails to reach the target negative torque value, activate the hydraulic retarder and the in-cylinder engine brake to compensate the braking force.

12. The apparatus for controlling the joint braking of the vehicle according to claim 11, wherein the apparatus is further configured to:
when the actual executed negative torque value of the drive motor remains continuously lower than the target negative torque value until a predetermined time threshold is reached, generate hydraulic braking demand prompt information.

13. The apparatus for controlling the joint braking of the vehicle according to claim 11, wherein the apparatus is configured such that dynamically adjusting the energy recovery intensity according to the state of the energy storage unit and the rotational speed of the drive motor further comprises:
determining, by the drive motor controller, an optimal energy recovery interval according to state of charge of the energy storage unit and a rotational speed threshold of the drive motor; and
automatically adjusting feedback energy intensity within the optimal energy recovery interval to achieve the target negative torque value.
wherein when the drive motor controller determines the optimal energy recovery interval and automatically adjusts the feedback energy intensity, the apparatus is further configured to:
acquire, in real time, a change rate of the state of charge of the energy storage unit;
when an absolute value of the change rate of the state of charge exceeds a preset threshold, predict a trend of the state of charge within a predetermined future time window based on current state of charge and its change rate;
dynamically correct the optimal energy recovery interval according to the predicted trend of the state of charge, and adjust the feedback energy intensity based on the corrected interval.

14. An electronic device, comprising at least one processor, and a memory communicatively connected to the at least one processor; wherein the memory stores an instruction executable by the at least one processor, and the instruction, when executed by the at least one processor, causes the at least one processor to perform the method for controlling the joint braking of the vehicle according to any one of claims 1 to 7.

15. A storage medium having a computer program stored thereon, wherein the computer program, when executed by a processor, implements the method for controlling the joint braking of the vehicle according to any one of claims 1 to 7.
